## Europäisches Patentamt

## European Patent Office

## Office européen des brevets

(19)

(11) Veröffentlichungsnummer: **0 217 213**
**B1**

(12) **EUROPÄISCHE PATENTSCHRIFT**

(45) Veröffentlichungstag der Patentschrift:
18.01.89

(51) Int. Cl.⁴: **G03B 42/04**

(21) Anmeldenummer: **86112720.7**

(22) Anmeldetag: **15.09.86**

(54) Automatisch be- und entladbare Röntgenfilmkassette und hierfür geeignetes Röntgenfilmkassettenbe- und -entladegerät.

(30) Priorität: **24.09.85 DE 3533954**

(43) Veröffentlichungstag der Anmeldung:
**08.04.87 Patentblatt 87/15**

(45) Bekanntmachung des Hinweises auf die Patenterteilung:
**18.01.89 Patentblatt 89/3**

(84) Benannte Vertragsstaaten:
**DE FR IT**

(56) Entgegenhaltungen:
**EP-A- 0 110 292**
**DE-A- 3 232 187**
**DE-B- 2 327 385**
**DE-B- 2 412 802**
**DE-B- 2 415 423**
**DE-B- 2 615 082**
**DE-C- 3 147 956**
**DE-C- 3 232 148**

(73) Patentinhaber: **Agfa-Gevaert AG, Patentabteilung,
D-5090 Leverkusen 1(DE)**

(72) Erfinder: **Schmidt, Manfred, Dipl.-Ing., Ligusterweg 34,
D-8011 Kirchheim(DE)**
Erfinder: **Gebele, Herbert, Dipl.-Ing., Scheicherweg 17,
D-8029 Sauerlach(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine für die automatische Be- und Entladung in einem Röntgenfilmkassettenbe- und -entladegerät geeignete Röntgenfilmkassette, die auf einer ihrer Flachseiten Angaben über die Kassette und oder den in ihr vorzusehenden oder vorgesehenen Blattfilm enthaltenden Strichcode aufweist sowie ein hierfür geeignetes Röntgenfilmkassettenbe- und -entladegerät.

Röntgenfilmkassettenbe- und -entladegeräte dieser Art sind beispielsweise durch die DE-PS 3 232 148 bekannt. Dabei ist die Bestimmung des Formats einer jeweils eingegebenen Kassette und damit die Auswahl eines neu in die Kassette einzuführenden Filmblattes relativ kompliziert.

Durch die europäische Patentanmeldung 0 079 557 ist es bekannt, Speicherfolien oder Röntgenfilm im Bereich eines zu öffnenden Kassetteneinbelichdungsfensters mit Strichcodes oder Magnetcodes zum automatischen Lesen von die Speicherfolie betreffenden Informationen zu versehen. Durch die DE-PS 3 147 956 ist außerdem die Anbringung eines löschbaren Strichcodes oder Magnetcodes oder elektrischen Codes auf dem Deckel einer Röntgenfilmkassette zur Kontrolle einer beabsichtigten Mehrfachbelichtung bekannt. Will man einen derartigen bekannten Code für die Angabe des Kassetten- oder Filmformates verwenden und in einem Be- und Entladegerät automatisch lesen, so besteht die Schwierigkeit, daß in ein Be- und Entladegerät Kassetten ganz verschiedener Formate eingegeben werden. Die großen Kassetten werden dabei infolge ihrer Größe im Eingabeschacht so gut geführt, daß sie etwa parallel zur Transportrichtung des Gerätes bewegt werden. Hier würde das Hindurchführen eines Codes auf der Kassette unter einem geräteseitigen automatischen Leser keine Schwierigkeiten bereiten. Je kleiner jedoch eine eingegebene Kassette ist, umso mehr besteht die Möglichkeit, sie irgendwie, z.B. völlig schief gegenüber der Transportrichtung, einzugeben. Somit bestünde hier die Wahrscheinlichkeit, daß bis zum Erreichen der ausgerichteten Endlage einer derartigen kleinen Kassette nur ein Teil des Codes unter dem automatischen Leser hindurchgeführt wird und dann infolge eines falschen Leseergebnisses die automatische Filmauswahl des neu einzugebenden Filmes versagt.

Der Erfindung liegt daher die Aufgabe zugrunde, einen Code, insbesondere für das Film- bzw. Kassettenformat, so auszubilden und auf den Kassetten anzubringen und in einem Be- und Entladegerät einen automatischen Leser so anzuordnen, daß der Code auch bei kleineren und kleinen, schief in das Gerät eingegebenen Kassetten vollständig erfaßt und gelesen wird.

Die Aufgabe der Schaffung und Anbringung eines entsprechenden Codes wird erfindungsgemäß gelöst durch die Merkmale des Hauptanspruchs. Weitere vorteilhafte Merkmale der Erfindung sowie die zugehörige Ausbildung eines Be- und Entladegerätes sind den Unteransprüchen entnehmbar.

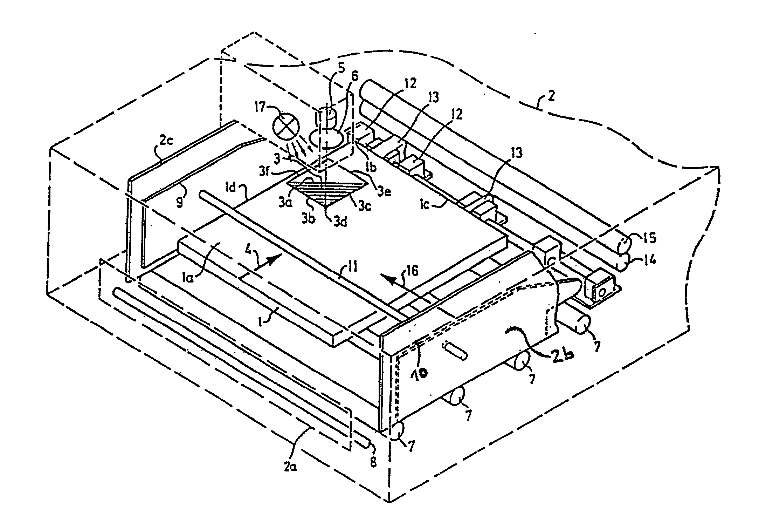

Die Erfindung wird anhand einer Zeichnung näher erläutert. Die einzige Figur zeigt eine perspektivische Darstellung von Teilen eines erfindungsgemäßen Röntgenfilmkassettenbe- und Entladegerätes bei abgenommenem Gehäuse und einer in dem Gerät in ihre Anschlaglage gebrachten Röntgenfilmkassette mit einem erfindungsgemäßen Code.

In der Figur ist eine Röntgenblattfilmkassette mittlerer Größe mit 1 bezeichnet. Da es auf Einzelheiten der Kassette 1 hierbei nicht ankommt, ist sie nur schematisch dargestellt. Sie kann in bekannter Weise aus einem Boden- und einem Deckelteil bestehen, wobei die Verriegelungsmittel für den Deckel so ausgebildet sind, daß er in einem Röntgenkassettenbe- und -entladegerät 2 automatisch geöffnet werden kann. In einem derartigen, an sich bekannten Gerät 2 können Kassetten 1 verschiedener Formate bearbeitet werden. Dabei werden die in einer Kassette 1 enthaltenen, belichteten Blattfilme entnommen und entsprechend der im Gerät erfolgten Bestimmung der Kassettengröße automatisch ein neuer Blattfilm des entsprechenden Formats in die Kassette 1 eingegeben und die Kassette nach dem Verschließen wieder aus dem Gerät 2 ausgegeben. Um nun die Formatbestimmung im Gerät 2 zu vereinfachen, ist auf einer Kassettenflachseite 1a, vorzugsweise der beim Eingeben in das Gerät 2 oben liegenden Flachseite, ein Strichcode 3 aufgebracht, der Angaben über die Kassette 1, vorzugsweise über die Kassettengröße bzw. die Größe des einzugebenden neuen Blattfilms enthält. Falls für jeweils ein Kassettenformat mehrere Filmsorten zur Verfügung stehen, z.B. für normale und für Mammografieaufnahmen, kann im Code 3 auch noch eine Angabe über die einzugebende Filmsorte enthalten sein. Der Code 3 hat für alle Kassettenformate die gleiche Lage bezüglich einer in dem Gerät 2 in Anschlag bringbaren Kassettenecke 1b. Im vorliegenden Fall ist dies die in Eingaberichtung 4 linke, vordere Ecke. Die Codes 3 für verschiedene Kassetten 1 sind also untereinander gleich groß und haben von den jeweiligen Kassettenstirnseiten 1c untereinander gleiche Abstände sowie auch von den mit der Kassettenstirnseite 1c die Ecke 1b bildenen Längsseite 1d ebenfalls untereinander gleiche Abstände.

Würde der Code nun eine bestimmte Streifenform haben und die Striche des Codes parallel zu einer Kassettenseite 1c oder 1d verlaufen, dann würde es häufig vorkommen, wenn kleinere Kassetten 1 schief in das Gerät 2 eingegeben werden und erst bei Erreichen ihrer Endlage ausgerichtet, d.h. mit ihrer Kassettenecke 1b in Endanschlag im Gerät 2 gebracht werden, daß der Code nicht vollständig unter einem im Gerät 2 angeordneten automatischen Leser für den Code durchgefahren wird, so daß der Leser dann ein falsches Ergebnis lesen und das Gerät 2 falsch steuern würde.

Um diese Gefahr einer Funktionsunfähigkeit zu vermeiden, hat der Code 3 die Form eines rechtwinkelig-gleichschenkeligen Dreiecks, wobei die Striche des Strichcodes 3 parallel zur Dreieckshypothenuse 3a verlaufen und die beiden gleichen Dreieckskatheten 3b, 3c parallel zu den Kanten 1c bzw. 1d der Kassettenflachseiten 1a liegen. Wie schon erwähnt, ist der Strichcode 3 einer Kassettenecke 1b, und zwar der Kassettenecke, die bei richtiger Eingabe der Kassette 1 in ein Gerät 2 in Anschlaglage gebracht wird, benachbart und bei allen verwendbaren Kassettengrößen lagemäßig gleich angebracht. Dabei ist das Dreieck 3 so gelegt, daß die Kassettenecke 1b auf der einen Seite der Dreieckshypothenuse 3a und die durch die Dreieckskatheten 3b, 3c gebildete Dreiecksspitze 3d auf der anderen Seite der Dreieckshypothenuse 3a liegen. Aus Designgründen kann der auf diese Weise gebildete dreieckige Strichcode 3 zu einem Quadrat mit zu den Kassettenkanten 1c, 1d parallelen Seiten 3b, 3c, 3e, 3f ergänzt werden. Dabei darf jedoch die dreieckige Hälfte des Quadrats, deren Spitze auf derselben Seite der Dreieckshypothenuse 3a liegt, wie die Kassettenecke 1b, keinen Strichcode enthalten. Es wäre aber auch möglich, daß die Strichcode-Dreiecksfläche 3 innerhalb einer größeren Srrichcodefläche liegt, also im Code nicht als Dreiecksfläche speziell erkennbar ist. Dies wäre beispielsweise dann der Fall, wenn die Strichcodefläche die Form eines Rechtecks oder Parallelogramms mit der Dreieckshypothenuse 3a als einer Seite hätte, wobei die Dreiecksspitze 3d in der zur Dreieckshypothenuse 3a parallelen Rechtecks- oder Parallelogrammseite liegen würde.

Geht man davon aus, daß ein geräteseitiger, fest angeordneter automatischer Leser 5, 6 etwa oberhalb und nur geringfügig innerhalb der Stelle liegt, an der die Dreiecksspitze 3d eines Strichcodes 3 einer jeden beliebigen Kassette 1 liegt, wenn deren Ecke 1b die Anschlaglage im Gerät 2 erreicht hat, dann kann eine Kassette 1 so schief eingeben und so beliebig im Gerät bis zur Anschlaglage verfahren werden, wie dies in der Praxis nur vorkommen kann. Immer wird der ganze Strichcode 3 dabei unter dem automatischen Leser 5, 6 ganz durchgefahren werden, so daß Steuerungsfehler infolge schiefer Eingabe kleinerer und kleiner Kassetten 1 vermieden sind. Würde nämlich eine Kassette 1 bereits mit ihrer Kante 1d in Anschlaglage in Richtung 4 in das Gerät eingeführt, dann würde der Strichcode 3 längs seiner Dreieckskathete 3c unter dem Leser 5, 6 durchgeschoben, so daß alle Striche des Codes vom Leser 5, 6 erfaßt werden. Würde die Kassette 1 mit ihrem Code 3 außerhalb des Lesers 5, 6 in Richtung 4 eingegeben und erst nach Erreichen der stirnseitigen Anschlagstellung in später zu beschreibender Weise gegen den seitlichen Anschlag im Gerät 2, also mit ihrer Ecke 1b in Anschlaglage geschoben werden, dann würde der Strichcode 3 längs der Dreieckskathete 3b unter dem Leser 5, 6 hindurchbewegt, so daß wiederum der ganze Code 3 vom Leser 5, 6 erfaßt wird. Diese beiden Möglichkeiten stellen aber die Grenzlagen einer Kassettenbewegung im Gerät dar, so daß alle anderen Bewegungsmöglichkeiten einer Kassette 1 in ihre Anschlaglage dazwischen liegen. Dementsprechend wird bei beliebigen Bewegungen einer Kassette 1 irgendeiner im Gerät 2 verwendbaren Größe immer deren gesamter Strichcode 3 unter dem Leser 5, 6 hindurchbewegt. Dabei gibt es bekannte Leser, die die relativ geringen Toleranzen der einzelnen zu erfassenden Strichbreiten bei Bewegung der Striche in Schlangenlinien durchaus ohne Fehlergebnisse aufzunehmen vermögen. Die erfindungsgemäße Strichcodeausgestaltung 3 bietet also die Möglichkeit, bei beliebiger Bewegung von Kassetten 1 unterschiedlicher Größen in einem Be- und Entladegerät 2 mit Sicherheit immer den gesamten Querschnitt des Strichcodes fehlerfrei zu erfassen und danach die Eingabe eines neuen Filmblattes in eine Kassette 1 zu steuern.

Von einem für das automatische Lesen einer erfindungsgemäßen Strichcodeanordnung 3 auf Röntgenfilmkassetten 1 geeigneten Kassettenbe- und -entladegerät ist das Gehäuse 2 weggelassen und nur strichpunktiert angedeutet. Da es für die vorliegende Erfindung nicht darauf ankommt, sind auch die übrigen Geräteteile, die zum besseren Verständnis erforderlich sind, nur schematisch angegeben. Die Vorrichtung zum Entnehmen eines Filmblattes aus einer eingegebenen Kassette und zum Weiterleiten derselben in eine Entwicklungsvorrichtung, die Dispensermagazine für die neuen Röntgenfilme der verschiedenen Größen und die Beladevorrichtung sind, weil in diesem Zusammenhang unwesentlich, völlig weggelassen worden. Das Gehäuse 2 weist einen Ein- und Ausgabeschacht 2a für die Filmkassetten 1 auf, der vor und nach der Eingabe einer Kassette 1 auf bekannte Weise lichtdicht verschließbar bzw. verschlossen ist. Der Schacht 2a ist seitlich durch in Kassettentransportrichtung 4 verlaufende Wände 2b, 2c begrenzt. Der Transport einer Kassette 1 erfolgt auf bekannte Weise durch Transportwalzen 7, denen eine Schaltwalze 8 zum Einschalten des Walzenantriebs bei Auflegen einer Kassette 1 vorgeschaltet sein kann. Der Antrieb für die Walzen 7 oder andere Transportmittel für die Kassette 1 kann auf jede bekannte Weise ein- und bei Erreichen der Anschlaglage einer Kassette ausschaltbar sein. Innerhalb der Wände 2b, 2c befindet sich auf der linken Anschlagseite eine zu den Wänden parallele Anschlagfläche 9 und auf der rechten Seite eine zu den Wänden parallele Schubfläche 10, die längs einer Führungsstange 11 quer zur Einschubrichtung 4 verschiebbar ist. Stirnseitig in Einschubrichtung 4 können verschiedene bekannte Vorrichtungen 12 zum Stillsetzen einer Kassette 1 in einer ersten Anschlaglage, sowie Vorrichtung 13 zum Öffnen der Kassette sowie auch Transportwalzen 14, 15 zum Abtransportieren eines einer Kassette entnommenen Filmblattes und Zuführen eines neuen Filmblattes vorgesehen sein. Es ist auch möglich, in bekannter Weise die Kassette nach Erreichen der gezeigten ersten Anschlagstellung zum Öffnen, zum Entnehmen des Films und zum Zuführen des neuen Films schrittweise weiterzutransportieren. Da im Zusammenhang mit der Strichcodeanordnung 3 nur die erste Anschlagstellung interessant ist, wird die Vorrichtung nur insoweit beschrieben.

Wenn eine Kassette 1 in Transportrichtung 4 stirnseitig bis zur gezeigten ersten Anschlagstellung bewegt ist, wird die Schubfläche 10 in Pfeilrichtung 16 angetrieben und schiebt die Kassette gegen die Anschlagfläche 9, so daß die linke, stirnseitige Kassettenecke 1b zusammen mit den Kassettenkanten 1c, 1d fixiert ist. Damit nehmen bei allen Kassetten 1 der verschiedenen Formate die Ecke 1b, die Kanten 1c, 1d und die dreieckige Strichcodefläche 3 dieselbe Stellung ein. Wie bereits erläutert, sind eine Optik 6 und ein Leser 7 für Strichcodes derart angeordnet, daß sie etwa senkrecht über und etwas innerhalb der Dreiecksspitze 3d liegen. Seitlich davon ist eine Beleuchtung 17 vorgesehen, die Licht ausstrahlt, für das der zu wechselnde Film unempfindlich ist, und den Strichcode 3 beleuchtet. In bereits beschriebener Weise wird dabei die Strichcodeanordnung 3 einer jeden Kassette auf alle Fälle quer zum Strichcode beim Eingeben der Kassette 1 in das Gerät 2 unter dem Leser 5, 6 vorbeibewegt. Dieser muß daher mit dem Anschalten der Kassettentransportvorrichtung 7 eingeschaltet werden. Je nach dem auf einer Kassette 1 befindlichen Strichcode steuert der Leser 6 dann die Auswahl eines neuen Filmblattes geeigneten Formats und ggf. auch dessen Bereitstellung und dessen Transport in die vorher entleerte Kassette, wobei die hierzu erforderlichen Steuer- und Antriebsmittel an sich bekannt sind. Es ist zweckmäßig, die Lesevorrichtung 5, 6, 17 nach dem erfolgten Lesen automatisch abzuschalten. Dies kann durch einen Schalter beim Erreichen der ersten Anschlaglage erfolgen.

Die gleichschenkelig-rechtwinkelige Ausbildung der Strichcodefläche 3 auf den Kassetten ist aber auch dann mit derselben Wirkung verwendbar, wenn ein Be- und Entladegerät verwendet wird, in dem die Kassetten in Einschubrichtung zentriert werden, die Ausrichtung also auf ihre Längsmittelebene in Einschubrichtung 4 erfolgt. In diesem Falle müssen die dreieckigen Strichcodeflächen bei den Kassetten verschiedenen Formats gleiche Abstände von der Stirnseite und der Kassettenlängsmittelebene haben.

## Patentansprüche

1. Für die automatische Be- und Entladung in einem Röntgenfilmkassettenbe- und -entladegerät geeignete Röntgenfilmkassette, die auf einer ihrer Flachseiten Angaben über die Kassette und oder den in ihr vorzusehenden oder vorgesehenen Blattfilm enthaltenden Strichcode aufweist, dadurch gekennzeichnet, daß der Strichcode die Form eines gleichschenkelig-rechtwinkeligen Dreiecks (3) aufweist und die Striche des Strichcodes parallel zur Dreieckshypothenuse (3a) und die Dreieckskatheten (3b, 3c) parallel zu den Kanten (1c, 1d) der Kassettenflachseiten (1a) angeordnet sind.

2. Kassette nach Anspruch 1, dadurch gekennzeichnet, daß der Strichcode (3) nahe einer der bei Eingabe in ein Röntgenfilmkassettenbe- und -entladegerät (2) stirnseitig liegenden Kassettenecken (1b) angeordnet ist und diese benachbarte Kassettenecke (1b) auf der einen Seite der Dreieckshypothenuse (3a) und die durch Dreieckskatheten (3b, 3c) gebildete Dreiecksspitze (3d) auf der anderen, inneren Seite der Dreieckshypothenuse (3a) liegen.

3. Kassette nach Anspruch 1 und 2, dadurch gekennzeichnet, daß der Strichcode (3) auf der bei Eingabe in ein Röntgenfilmkassettenbe- und -entladegerät (2) oben liegenden Kassettenflachseite (1a) mit seinen Dreieckskatheten (3b, 3c) in vorgegebenen, bei allen in dem Röntgenfilmkassettenbe- und -entladegerät (2) verwendbaren Kasseten gleichen Abständen von den die benachbarte Kassettenecke bildenden Kanten (1c, 1d) der Flachseite (1a) angeordnet ist.

4. Kassette nach Anspruch 1 oder einem anderen der vorhergehenden Ansprüche, dadurch gekennzeichnet, daß das gleichschenkelig-rechtwinkelige Strichcodedreieck (3) innerhalb einer größeren, z.B. rechteckigen Strichcodefläche liegt.

5. Röntgenfilmkassettenbe- und -entladegerät zur Verwendung von Kassetten nach einem der Ansprüche 1 bis 4, dadurch gekennzeichnet, daß die Kassetten (1) aller verwendbaren Formate mit ihrer jeweils dem Strichcode (3) benachbarten Kassettenecke (1b) im Gerät (2) in Anschlag bringbar sind und daß eine bekannte optisch-elektronische Leseeinrichtung (5, 6) für die Strichcodes (3) etwa über der Dreiecksspitze (3d) des Strichcodes (3) einer in Anschlag gebrachten Kassette angeordnet ist.

6. Röntgenfilmkassettenbe- und -entladegerät nach Anspruch 5, dadurch gekennzeichnet, daß eine Beleuchtungseinrichtung (17) für den Strichcode (3) seitlich neben der Leseeinrichtung (5, 6) vorgesehen ist.

7. Röntgenfilmkassettenbe- und -entladegerät nach Anspruch 6, dadurch gekennzeichnet, daß die Beleuchtungseinrichtung (17) Licht mit Wellenlängen ausstrahlt, für die ein in den Kassetten (1) vorgesehenes oder vorzusehendes Filmblatt unempfindlich ist.

8. Röntgenfilmkassettenbe- und -entladegerät nach Anspruch 6, dadurch gekennzeichnet, daß die Beleuchtungseinrichtung (17) beim Eingeben einer Kassette ein- und vor der Einschaltung weiterer Bedienungsvorgänge, wie Öffnen eines Kassettendeckels, Entnehmen eines belichteten Filmblattes, Zuführen eines neuen Filmblattes, wieder ausschaltbar ist.

9. Röntgenfilmkassettenbe- und -entladegerät nach einem der Ansprüche 5 bis 8, dadurch gekennzeichnet, daß durch die Leseeinrichtung (5, 6) Auswahl- und Transportmittel entsprechend dem Strichcode (3) einer in das Gerät eingebrachten Kassette (1) in Betrieb setzbar sind, durch welche ein dem Strichcode der eingebrachten Kassette entsprechendes neues Filmblatt bereitgestellt wird und in die Kassette nach deren Entleerung einbringbar ist.

## Claims

1. X-ray film cassette suitable for automatic loading and unloading in a device for loading and unloading X-ray film cassettes, which cassette has, on one of its flat sides, a bar code containing details concerning the cassette and or the sheet film provided or to be provided therein, characterised in that the bar code has the form of a right-angled isosceles triangle (3) and the bars of the bar code are arranged parallel to the hypotenuse (3a) of the triangle and the other sides (3b, 3c) of the triangle are arranged parallel to the edges (1c, 1d) of the flat sides (1a) of the cassette.

2. Cassette according to Claim 1, characterised in tat the bar code (3) is arranged near one of the cassette corners (1b) situated at the front end upon insertion into a device (2) for loading and unloading X-ray film cassettes and this proximate cassette corner (1b) is situated on the one side of the hypotenuse (3a) of the triangle and the vertex (3d) of the triangle formed by the other sides (3b, 3c) of the tri-anlge is situated on the other inner side of the hypotenuse (3a) of the triangle.

3. Cassette according to Claim 1 and 2, characterised in that the bar code (3) is arranged on the flat side (1a) of the cassette which lies on top upon insertion into a loading and unloading device (2) for X-ray film cassettes, the other sides (3b, 3c) of the bar code triangle being situated at prescribed intervals from the edges (1c, 1d) of the flat side (1a) forming the proximate cassette corner, which intervals are the same for all the cassettes which can be used in the loading and unloading device (2) for X-ray film cassettes.

4. Cassette according to Claim 1 or one of the other preceding claims, characterised in that the right-angled isosceles bar code triangle (3) is situated within a larger, for example, rectangular bar code field.

5. Loading and unloading device for X-ray film cassettes for the use of cassettes according to one of Claims 1 to 4, characterised in that the cassettes (1) of all the usable formats can be brought into a stop position in the device (2) with in each case that cassette corner (1b) which is proximate to the bar code (3) and in that a known optoelectronic reading device (5, 6) for the bar codes (3) is arranged approximately above the vertex (3d) of the bar code (3) triangle of a cassette which has been brought into the stop position.

6. Loading and unloading device for X-ray film cassettes according to Claim 5, characterised in that an illumination device (17) for the bar code (3) is provided at the side next to the reading device (5, 6).

7. Loading and unloading device for X-ray film cassettes according to Claim 6, characterised in that the illumination device (17) radiates light with wavelengths to which a film sheet provided or to be provided in the cassettes (1) is insensitive.

8. Loading and unloading device for X-ray film cassettes according to Claim 6, characterised in that the illumination device (17) is switched on during the insertion of a cassette and is switched off before any further operating steps, such as the opening of a cassette lid, the removal of an exposed film sheet, or the introduction of a new film sheet, are actuated.

9. Loading and unloading device for X-ray film cassettes according to Claims 5 to 8, characterised in that selecting and transporting means can be set in operation by the reading device (5, 6) according to the bar code (3) of a cassette (1) inserted into the device, with the aid of which means a new film sheet corresponding to the bar code of the inserted cassette is made available and can be introduced into the cassette when it is empty.

## Revendications

1. Cassette radiographique convenant au chargement et au déchargement automatiques du film dans un appareil de chargement/déchargement de cassettes radiographiques, dont l'une des grandes faces porte un code à barres contenant des indications relatives à la cassette et/ou au film en forme de feuille à prévoir ou prévu en elle, caractérisée en ce que le code à barres affecte la forme d'un triangle rectangle isocèle (3), les barres du code sont disposées parallèles à l'hypoténuse (3a) du triangle et les côtés (3b, 3c) de l'angle droit du triangle sont disposés parallèles aux côtés (1c, 1d) des grandes faces (1a) de la cassette.

2. Cassette selon la revendication 1, caractérisée en ce que le code à barres (3) est disposé près d'un des angles (1b) situés à l'avant de la cassette dans un appareil (2) de chargement/déchargement de cassettes radiographiques et que cet angle ou coin (1b) de la cassette se trouve d'un côté de l'hypoténuse (3a) du triangle, tandis que la pointe (3d) du triangle, formée par les côtés (3b, 3c) de l'angle droit du triangle, se trouve de l'autre côté ou côté intérieur de l'hypoténuse (3a).

3. Cassette selon les revendications 1 et 2, caractérisée en ce que le code à barres (3) est disposé sur la grande face (1a) de la cassette située en haut lors de l'introduction dans un appareil (2) de chargement/déchargement de cassettes radiographiques, de manière que les côtés (3b, 3c) de l'angle droit du triangle formé par lui se trouvent à des distances préfixées, qui sont les mêmes sur toutes les cassettes utilisables dans cet appareil (2), des côtés (1c, 1d) de la grande face (1a) formant ledit coin de la cassette.

4. Cassette selon la revendication 1 ou une autre des revendications précédentes, caractérisée en ce que le triangle rectangle isocèle portant le code à barres (3) est situé dans une aire de code à barres plus grande, ayant une forme rectangulaire par exemple.

5. Appareil de chargement/déchargement de cassettes radiographiques, pour l'utilisation de cassettes selon l'une des revendications 1 à 4, caractérisé en ce que les cassettes (1) de tous les formats utilisables peuvent être amenées en butée dans l'appareil (2) par leur coin (1b) voisin du code à barres (3) et qu'un dispositif de lecture optique-électronique (5, 6) connu pour les codes à barres (3) est placé à peu près au-dessus de la pointe (3d) formée par l'angle droit du triangle du code à barres (3) d'une cassette amenée en butée.

6. Appareil selon la revendication 5, caractérisé en ce qu'un dispositif d'éclairement (17) pour le code à barres (3) est prévu à côté du dispositif de lecture (5, 6).

7. Appareil selon la revendication 6, caractérisé en ce que le dispositif d'éclairement (17) émet de la lumière ayant des longueurs d'onde pour lesquelles un film en feuille prévu ou à prévoir dans les cassettes (1) est insensible.

8. Appareil selon la revendication 6, caractérisé en ce que le dispositif d'éclairement (17) peut être enclenché à l'introduction d'une cassette et peut être arrêté de nouveau avant le déclenchement d'autres opérations, telles que l'ouverture du couvercle d'une cassette, l'enlèvement d'un film en feuille exposé ou l'amenée d'un nouveau film en feuille.

9. Appareil selon l'une des revendications 5 à 8, caractérisé en ce que le dispositif de lecture (5, 6) est capable de produire la mise en service de moyens de sélection et de transport en fonction du code à barres (3) porté par une cassette (1) introduite dans l'appareil, moyens par lesquels un nouveau film en feuille est mis à disposition et peut être introduit dans la cassette, après le vidage de celle-ci, conformément au code à barres porté par la cassette introduite.